# EUROPEAN PATENT SPECIFICATION

(11) **EP 0 371 545 B1**
(45) Date of publication and mention of the grant of the patent: **05.05.1993**
(21) Application number: 89202950.5
(22) Date of filing: 20.11.1989
(51) Int. Cl.: A01G 9/02, A01G 31/02

(54) **Device for growing plants**
Pflanzenzuchtvorrichtung
Appareil pour cultiver des plantes

(30) Priority: 24.11.1988 NL 8802896
(43) Date of publication of application: 06.06.1990
(73) Proprietor: Both, Arend, NL-7887 TR Erica (NL)
(72) Inventor: Both, Arend, NL-7887 TR Erica (NL)
(74) Representative: de Bruijn, Leendert C.

(56) References cited:
- DE-A- 3 016 444
- NL-A- 8 401 638
- NL-A- 8 503 000
- US-A- 3 766 684
- US-A- 4 407 092

## Description

The invention relates to a device for growing plants on an aqueous growing medium, comprising a growing trough and one or more foamed plastic blocks or the like for the accommodation of the plants, said trough being closed at its front and rear end and being provided with feed and discharge means for the aqueous growing medium, and said trough being provided with means for supporting the foamed plastic blocks or the like a distance from the bottom of the trough, which supporting means comprise two essentially parallel longitudinal walls at right angles to the bottom of the trough.

Such a device is known from US-A-4407092. The device described therein contains wafers of a hygroscopic growing medium, into which the seeds are accomodated. The wafer is connected to a wick which extends downwardly into a tray with a nutrient solution. By means of the wick said nutrient solution is fed into the wafer, in such a way that it is soaked and expanded. Thereby, the wafer is transformed in a porous root supporting block containing said nutrient solution.

Said block supports the plants fully, i.e. it supports the weight of the plant and provides a stable base against-toppling of the plant.

The roots grow out under the blocks and are in contact with the bottom of the trough, on which a layer of aqueous growing medium, the nutrient solution, is present.

The cuttings or seeds can grow in this way. More and more roots form, the top parts of which, i.e. directly underneath the blocks, are not immersed in the growing medium, and thus as aerial roots can absorb oxygen from the air.

Above the blocks the cuttings or seeds grow into plants.

There comes a time when the space between the blocks and the bottom of the trough is completely filled with roots, and the plants will not grow any further.

The blocks then have to be removed with the plants from the trough, and the plants removed from the blocks and transplanted to places where they can grow further to maturity.

The blocks form waste.

This further growth to maturity can take place on rock wool or the like, or in the ground.

Applicant had the idea that the cuttings or germinated seeds can remain much longer - even during their entire growing time - in the device if this device according to the invention is characterized in that the dimension of the walls (5, 6) in the direction perpendicular with respect to the bottom (1) of the trough is larger than the height of the blocks, and that the blocks fit with play between the walls in such a way that the blocks are movable parallel to the walls (5, 6).

Since the blocks can move freely upwards in the vertical direction, there is no risk of the whole space underneath the blocks being filled with roots, which would stop further growth.

In this way there is root contact with the nutrient solution during the entire growth of the plant, but the point of origin of the roots is above the nutrient solution at every growth phase. The roots will thus always continue acting partially as aerial roots.

Transplanting of the plants to substrate or soil is not necessary. The plant can remain in the trough throughout the growing period.

Of course, a suitable trough dimension must be used for each type of plant.

The device according to the invention is suitable for vegetable growing, but also for growing ornamental flowers and plants.

The problem of disposing of very large quantities of substrate, such as rock wool, is thus eliminated.

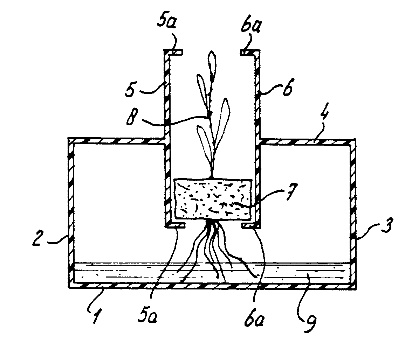

An embodiment of the device according to the invention is shown as an example in cross-section in the drawing.

The trough according to this embodiment is made of, for example, extruded plastic or aluminium, and in principle comprises a bottom 1, upright walls 2 and 3, and a top wall 4. This top wall 4 contains over its entire length a slit bounded by parallel vertical walls 5 and 6. These vertical walls are provided at the top and bottom with flanged edges 5a and 6a facing each other.

A block of foamed plastic 7 or the like rests on the bottom flange edges 5a and 6a over the entire length. This block is slightly narrower than the distance between the walls 5 and 6. Of course, a number of the same blocks can be placed connecting to each other in the trough.

In order to ensure that the walls 5 and 6 remain at their predetermined distance, it say be necessary to have reinforcements, which are not shown in the drawing, because they are not of importance for the principle of the invention.

These blocks of foamed plastic 7 must be of water-repellent and inert material. The blocks must also be light in weight, and these blocks are preferably of a material which is degradable after use.

The blocks 7 contain, in the known manner, vertical passages into which a cutting 8 or seed can always be inserted. In the drawing the device is sectioned over such a passage.

A thin layer of aqueous growing medium, indicated by 9, circulates over the bottom 1. The tips of the roots of the cuttings or germinating seeds are in contact with the nutrient solution. The part of the roots above that continues acting as an aerial root.

Aerial roots become water roots.

New aerial roots are constantly being produced.

As the plant 8 grows further, the roots increase in size, and the block 7 containing the plant is pressed upwards.

In this way the plant 8 can grow fully or essentially fully to maturity in the device according to the invention.

## Claims

1. Device for growing plants on a aqueous growing medium (9), comprising a growing trough and one or more foamed plastic blocks (7) or the like for the accommodation of the plants, said trough being closed at its front and rear end and being provided with feed ad discharge means for the aqueous growing medium (9), and said trough being provided with means (5, 5^{a}, 6, 6^{a}) for supporting the foamed plastic blocks or the like a distance from the bottom (1) of the trough, which supporting means comprise two essentially parallel longitudinal walls (5, 6) at right angles of the bottom (1) of the trough characterized in that the dimension of the walls (5, 6) in the direction perpendicular with respect to the bottom (1) of the trough is larger than the height of the blocks, and that the blocks fit with play between the walls in such a way that the blocks are movable parallel to the walls (5, 6).

## Patentansprüche

1. Vorrichtung zur Aufzucht von Pflanzen auf einem wäßrigen Aufzuchtmedium (9), mit einem Aufzuchttrog und einem oder mehreren geschäumten Kunststoffblöcken (7) o. dgl. zur Aufnahme der Pflanzen, wobei der Trog an seinem vorderen und hinteren Ende geschlossen ist, eine Einrichtung zum Einfüllen und Austragen des wäßrigen Aufzuchtmediums (9) aufweist und mit einer Einrichtung (5, 5^{a}, 6, 6^{a}) zur Halterung der geschäumten Kunststoffblöcke o. dgl. in einem Abstand vom Boden (1) des Trogs versehen ist, wobei die Halteeinrichtung zwei im wesentlichen parallele Längswandungen (5, 6) rechtwinkelig zum Boden (1) des Trogs aufweist, **dadurch gekennzeichnet, daß** die Dimension der Wandungen (5, 6) lotrecht zum Boden (1) des Trogs größer ist als die Höhe der Blöcke, und daß die Blöcke so mit Spiel zwischen die Wandungen passen, daß sie parallel zu den Wandungen (5, 6) bewegbar sind.

## Revendications

1. Dispositif pour cultiver des plantes sur un milieu de culture aqueux (9), comprenant un bac de culture et un ou plusieurs blocs de plastique mousse (7) ou analogues pour loger les plantes, ledit bac étant fermé à ses extrémités avant et arrière et étant doté de moyens de distribution et d'évacuation pour le milieu de culture aqueux (9), et ledit bac étant doté de moyens (5, 5a, 6, 6a) pour supporter les blocs de plastique mousse ou analogues à une certaine distance du fond (1) du bac, lesquels moyens de support comprennent deux parois longitudinales sensiblement parallèles (5, 6), perpendiculaires au fond (1) du bac caractérisé en ce que la dimension des parois (5, 6) dans la direction perpendiculaire au fond (1) du bac est plus grande que la hauteur des blocs, et en ce que les blocs s'emboîtent avec jeu entre les parois de manière que les blocs soient mobiles parallèlement aux parois (5, 6).
